# EUROPEAN PATENT APPLICATION

(11) **EP 2 386 435 A1**
(43) Date of publication of application: **16.11.2011**
(21) Application number: 11165304.4
(22) Date of filing: 09.05.2011
(51) Int. Cl.: B60J 5/10

(54) **A commercial vehicle with a door assembly**

(30) Priority: 10.05.2010 TR 201003670
(71) Applicant: Tofas Turk Otomobil Fabrikasi Anonim Sirketi, 16369 Bursa (TR)
(72) Inventor: Yilmaz, Senol, 16369, Bursa (TR)
(74) Representative: Dericioglu, E. Korhan

(57) **Abstract**

The present invention specifically relates to a commercial vehicle whose door, through which loading is carried out, can be opened both upward and sideward optionally. The said commercial vehicle (1) comprises a body (2); at least one opening (3) which is located on the body (2); and at least one door assembly (4) which covers the opening (3), and enables and limits access into the body (2) by being opened and closed when it is wanted. The door assembly (4) comprises at least one frame (5) which is located on the body (2) such that it can make rotary motion around the horizontal axis via connection members, and at least one door (6) which is located on the frame (5) such that it can make rotary motion around the vertical axis via connection members.

## Description

### Field of the Invention

The present invention specifically relates to a commercial vehicle whose door, through which loading is carried out, can be opened both upward and sideward optionally.

### Background of the Invention

Nowadays cargo especially in city is carried out with light commercial vehicles. The said vehicle is generally accessed from the door located at the rear part of the vehicle and the loads wanted to be transported are placed inside the vehicle. Two types of doors are used in the said vehicles according to the manner of opening. One of the door types is opened sideward, whereas the other type is opened upwards.

In the vehicles having rear doors opening sideward, these doors pose an obstacle during loading and cause various difficulties to occur during loading. The problems encountered in doors opening sideward are not in discussion with the vehicles having a rear door opening upward. But with the door opening upward, the rear door in open position causes that the forklift cannot approach the vehicle enough in the goods to be loaded with forklift.

For the both doors mentioned it is possible to talk about advantages and disadvantages. In cases the said criteria are not important, the driver has to make a choice according to his/her own anatomy and preference. Different body movements are performed in both door opening manners.

The Japanese patent document no. JP2002046472 discloses a vehicle back door which can be opened in two ways. The vehicle back door consists of two parts, namely upper part and lower part. The lower part frame can move in vertical axis on a rail. Opening and closing of the upper door is realized through a hinge on the upper edge. When the door is wanted to be opened, firstly the lower door superposes the upper door by sliding, then the lower and upper doors are upheld together.

The United States patent document no. US2005253406 discloses a vehicle back door having more than one opening modes. The back door comprises a frame, which is connected to the vehicle from its upper edge with hinges, and two covers, namely lower cover and upper cover, in the frame. The lower and the upper covers can be opened by rotating around lower and upper axis independently.

### Summary of the Invention

The objective of the present invention is to realize a commercial vehicle having a door assembly capable of opening upward or sideward optionally.

### Detailed Description of the Invention

A commercial vehicle developed to fulfill the objective of the present invention is illustrated in the accompanying figures, in which,

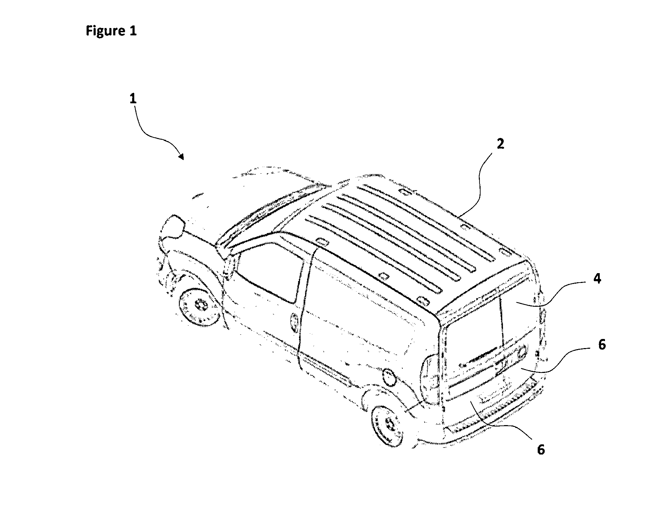

FIGURE 1 is the perspective view of the door assembly of a commercial vehicle in closed position.

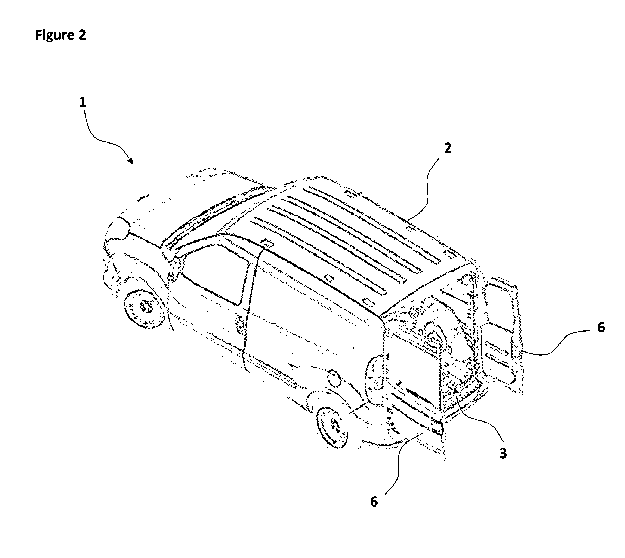

FIGURE 2 is the perspective view of the door assembly of a commercial vehicle in sidewardly open position.

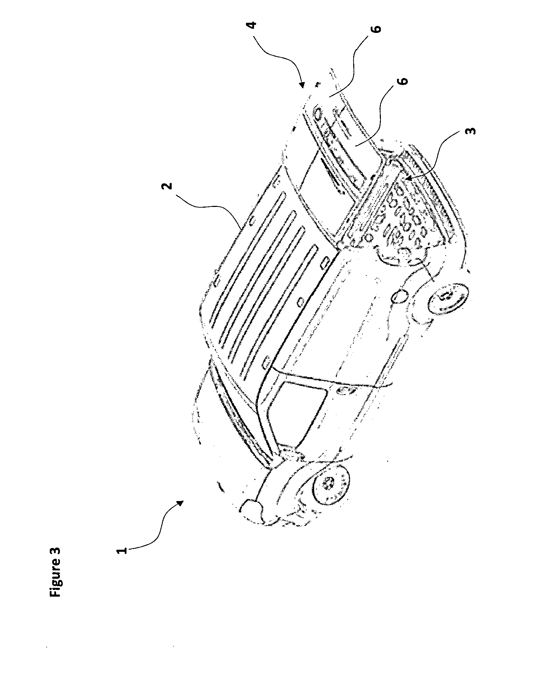

FIGURE 3 is the perspective view of the door assembly of a commercial vehicle in upwardly open position.

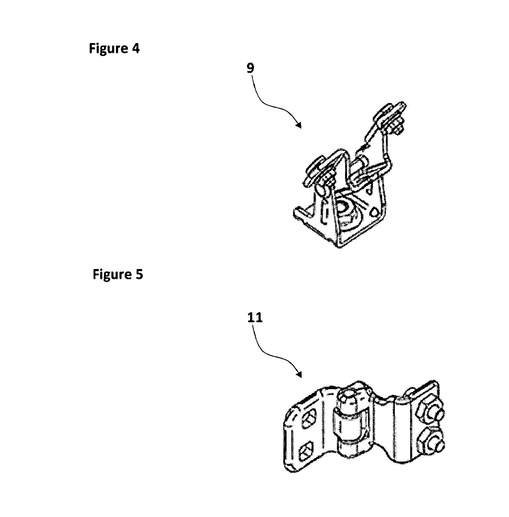

FIGURE 4 is the view in details of the horizontal-axis hinge located in the door assembly of a commercial vehicle.
FIGURE 5 is the view in details of the vertical-axis hinge located in the door assembly of a commercial vehicle.

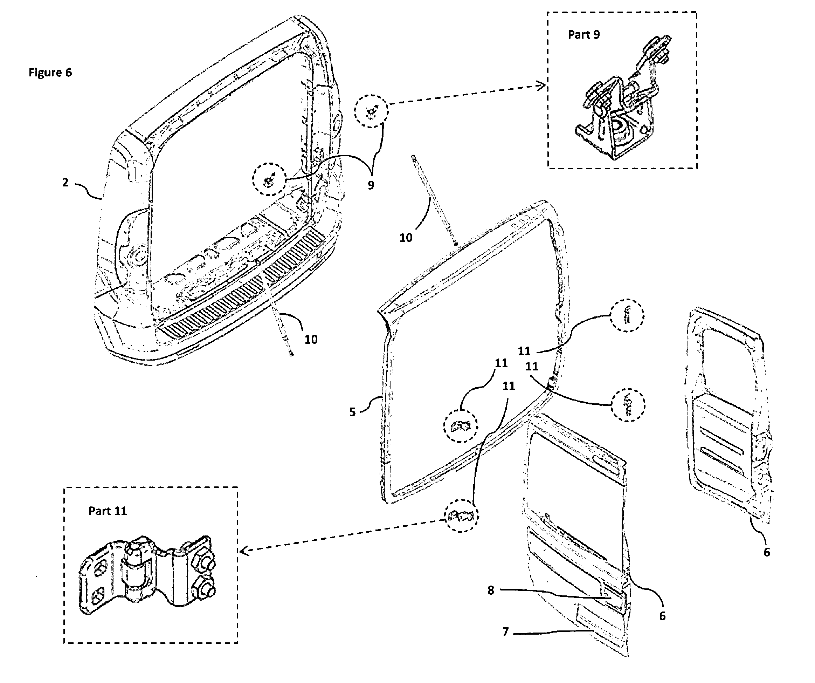

FIGURE 6 is the exploded perspective view of the door assembly of a commercial vehicle

The parts illustrated in the figure are individually numbered where the numbers refer to the following:
1. Commercial vehicle
2. Body
3. Opening
4. Door assembly
5. Frame
6. Door
7. Handle for opening upward
8. Handle for opening sideward
9. Horizontal-axis hinge
10. Piston
11. Vertical-axis hinge

Hereinafter, the axis which extends parallel to the ground will be referred as horizontal axis, and the axis which intersects the horizontal axis vertically will be referred as vertical axis.

The inventive commercial vehicle (1) comprises;
a body (2),
at least one opening (3) which is located on the body (2), and
at least one door assembly (4) which covers the opening (3), enables or limits the access into the body (2) by being opened and closed when it is wanted.

A door assembly (4) comprises;
at least one frame (5) which is located on the body (2) such that it can make rotary motion around the horizontal axis via connection members, and
at least one door (6) which is located on the frame (5) such that it can make rotary motion around the vertical axis via connection members.

On the door (6) there are at least one handle for opening upward (7) which enables the door assembly (4) to move upward by the frame (5) being rotated by the user around horizontal axis and at least one handle for opening sideward (8) which enables the door (6) to be opened sideward by the door (6) being rotated on the frame (5) around the vertical axis.

On the body (2), there is at least one lock mechanism (not shown in the figures) which prevents the frame (5) from moving freely (it is not described in details because it is one of the lock mechanisms used today). The said lock mechanism releases the frame (5) as a result of the force applied on the handle for opening upward (7). By this means the frame (5) moves away from the opening (3) by rotating around the horizontal axis and by this means it becomes possible to access inside the vehicle (1) from outside.

On the door (6), there is at least one lock mechanism (not shown in the figures) which prevents the door (6) from moving freely (it is not described in details because it is one of the lock mechanisms used today). The said lock mechanism releases the door (6) as a result of the force applied on the handle for opening sideward (8). By this means the door (6) moves away from the opening (3) by rotating around the vertical axis and by this means it becomes possible to access inside the vehicle (1) from outside.

In the inventive commercial vehicle (1), the door assembly (4) is connected to the vehicle (1) by means of placing the frame (5) onto the body (2). The door assembly (4) comprises at least one horizontal-axis hinge (9) which is fixed onto the body (2) and enables the frame (5) and the body (2) to connect to each other such that it will allow the frame (5) to make rotary motion in horizontal axis; and at least one piston (10) which enables the rotary motion of the frame (5) to be realized in a controlled manner. In the preferred embodiment of the invention, two hinges (9) and two pistons (10), which are located in opposite positions to each other according to the body (2), are used in connection of frame (5) to the body (2).

The door (6) is placed onto the frame (5) such that it can rotate around the horizontal axis. By this means it is enabled that the door (6) opens sideward. The said door assembly (4) comprises at least one vertical-axis hinge (11) which is fixed onto the frame (5) and connects the frame (5) and the door (6) to each other. In the preferred embodiment of the invention at least two vertical-axis hinges (11), which are located in opposite positions according to the frame (5), are used for connecting the door (6) to the frame (5).

The user applies up-force to the handle for opening upward (7) which is located on the door (6) when he/she wants to uphold the frame (5), which is located on the door assembly (4), thus the door assembly (4). When the force applied exceeds a certain value (threshold value), the frame (5) releases from the lock mechanism located on the body (2), and the frame (5) starts to rotary motion in rotation axis of the horizontal hinge (9) which connects the body (2) and the frame (5) to each other, in other words around horizontal axis. By means of the piston (10) it is enabled that the frame (5) moves angular with constant speed securely such that the hinge (9) will be the turning point. When the frame (5) changes its place as the predetermined angle, it remains in the position it comes with the effect of the piston (10), and it cannot move further. By this means the door assembly (4) moves upward and it becomes possible to load the goods inside the vehicle from the opening (3). When the door assembly (4) is wanted to cover the opening (3) again, force is applied to the frame (5) in downward direction by holding the handle for opening upward (7) and the frame (5) moves angular in opposite direction with the motion described above such that the hinge (9) will be the turning point. When the frame (5) comes to the lowermost position, it is enabled that the frame (5) gets locked to the lock mechanism by applying force, massive enough to enable the frame (5) to get locked to the lock mechanism, to the handle for opening upward (7) or by applying more force. By this means the door assembly (4) eliminates the possibility to access inside the vehicle (1) by covering the opening (3).

When the user wants to access inside the vehicle by opening the door (6) sideward, applies force to the handle for opening sideward (8) located on the door (6). When the force applied exceeds a certain value (threshold value), the door (6) releases from the lock mechanism, and the door (6) starts to rotary motion in rotation axis of the vertical hinge (11), which connects the door (6) and the frame (5) to each other, in other words around vertical axis. When the door (6) changes its place as the predetermined angle, it remains in the position it comes, and it cannot move further. By this means the door (6) located on the door assembly (4) moves sideward and it becomes possible to load the goods inside the vehicle (1) from the opening (3). When the door assembly (4) is wanted to cover the opening (3) again, force is applied to the door (6) and the door (6) moves angular in opposite direction with the motion described above such that the vertical-axis hinge (11) will be the turning point It is enabled that the door (6) gets locked to the lock mechanism by applying force, massive enough to enable the door (6) to get locked to the lock mechanism, to the door (6). By this means the door assembly (4) eliminates the possibility to access inside the vehicle (1) by covering the opening (3).

In the preferred embodiment of the invention the opening (3) is present at rear of the vehicle (1). The goods is loaded into the vehicle (1) by means of this opening (3).

In the preferred embodiment of the invention two doors (6) are located on the frame (5). The said doors (6) rotate towards opposite directions to each other in order to open and close. In this described embodiment of the invention the handle for opening upward (7) is composed of two parts. The said parts are present on the different doors (6) such that they will they will compose a whole by completing each other when the doors (6) are closed. In this embodiment of the invention there is a handle for opening sideward (8) on both doors (6).

Within the scope of this basic concept, it is possible to develop various embodiments of the inventive commercial vehicle (1). The invention can not be limited to the examples described herein; it is essentially according to the claims.

## Claims

1. A commercial vehicle (1) **comprising** a body (2),
at least one opening (3) which is located on the body (2), and **characterized by** at least one door assembly (4) which covers the opening (3), and enables or limits access into the body (2) by being opened and closed when it is wanted, and
has at least one frame (5) which is located on the body (2) such that it can make rotary motion around the horizontal axis via connection members, and
at least one door (6) which is located on the frame (5) via the connection member such that it can make rotary motion around the vertical axis.

2. A commercial vehicle (1) according to claim 1, **characterized by** a door (6) having at least one handle for opening upward (7) which enables the door assembly (4) to move upwards by the frame (5) being rotated by the user around the horizontal axis.

3. A commercial vehicle (1) according to claim 1 or 2, **characterized by** a door (6) having at least one handle for opening sideward (8) which enables it to be opened sideward by being rotated on the frame (5) around the vertical axis.

4. A commercial vehicle (1) according to any of the claims 1 to 3, **characterized by** a door assembly (4) having at least one horizontal-axis hinge (9) which is fixed onto the body (2) and enables the frame (5) and the body (2) to connect to each other such that it will allow the frame (5) to make rotary motion in horizontal axis; and at least one piston (10) which enables the rotary motion of the frame (5) to be realized in a controlled manner.

5. A commercial vehicle (1) according to any of the claims 1 to 4, **characterized by** a door assembly (4) having at least one vertical-axis hinge (11) which is fixed onto the frame (5) and enables the frame (5) and the door (6) to connect to each other such that the door (6) can rotate on the frame (5) around vertical axis.

6. A commercial vehicle (1) according to any of the preceding claims, **characterized by** a frame (5) which is located on both doors (6).

7. A commercial vehicle (1) according to claim 6, **characterized by** a handle for opening upward (7) which is located on different doors (6) and consists of two parts that are placed on the doors (6) such that they will compose a whole by completing each other when the doors (6) are closed.

8. A commercial vehicle (1) according to claim 6 or 7, **characterized by** a handle for opening sideward (8) which is located on the both doors (6).
